(19) Europäisches Patentamt
European Patent Office
Office européen des brevets

(11) **EP 2 447 799 B1**

(12) **EUROPÄISCHE PATENTSCHRIFT**

(45) Veröffentlichungstag und Bekanntmachung des Hinweises auf die Patenterteilung:
**28.04.2021 Patentblatt 2021/17**

(51) Int Cl.:
**G05D 1/02** *(2020.01)*     **A01D 34/00** *(2006.01)*

(21) Anmeldenummer: **11184994.9**

(22) Anmeldetag: **13.10.2011**

(54) **Führungssystem für steuerbare Fahrzeuge**

Guide system for controllable vehicles

Système de guidage pour véhicules pouvant être commandés

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2010 DE 202010008800 U**

(43) Veröffentlichungstag der Anmeldung:
**02.05.2012 Patentblatt 2012/18**

(73) Patentinhaber: **AL-KO Gardentech Austria GmbH 8742 Obdach (AT)**

(72) Erfinder: **Kluge, Dr. Boris 89160 Dornstadt (DE)**

(74) Vertreter: **Dr. Binder & Binder GbR Neue Bahnhofstraße 16 89335 Ichenhausen (DE)**

(56) Entgegenhaltungen:
EP-A1- 0 384 841      DE-A1- 2 257 081
DE-A1-102009 005 119      GB-A- 2 358 843

**Beschreibung**

Die Erfindung betrifft ein Führungssystem für steuerbare Fahrzeuge. Derartige Führungssysteme sind in der Praxis bekannt. Sie weisen in der Regel ein Fahrzeug und einen Bodenleiter auf, der über eine Stromeinspeisung mit einem elektrischen Stromsignal beaufschlagt wird. Am Fahrzeug ist eine Empfangseinheit angeordnet, die ein in Abhängigkeit von dem Stromsignal auf dem Bodenleiter erzeugtes Magnetfeld erfasst.

Als nächstliegenden Stand der Technik gilt die Druckschrift DE 22 57 081 A1, welche ein Führungssystem gemäß dem Oberbegriff des Anspruchs 1 offenbart. Als weiteren Stand der Technik wird noch auf die Druckschrift DE 10 2009 005 119 A1 verwiesen.

Bisher bekannte Führungssysteme für steuerbare Fahrzeuge arbeiten nicht optimal. Es ist daher die Aufgabe der vorliegenden Erfindung, ein verbessertes Führungssystem für steuerbare Fahrzeuge und ein zugehöriges Verfahren aufzuzeigen.

Die Erfindung löst diese Aufgabe mit den Merkmalen im jeweiligen Kennzeichenteil der eigenständigen Ansprüche.

Es wird daher vorgeschlagen, ein Führungssystem für steuerbare Fahrzeuge, wobei das Führungssystem einen außerhalb des Fahrzeugs angeordneten elektrischen Leiter, insbesondere ein Bodenkabel, und eine Stromeinspeisung für den Leiter aufweist, wobei am Fahrzeug eine Empfangseinheit für das elektromagnetische Feld des Leiterstroms angeordnet ist, wobei das Führungssystem eine Codiereinrichtung zur Erzeugung eines Signalcodes im Leiterstrom aufweist und am Fahrzeug eine mit der Empfangseinheit verbundene Codeerkennungseinrichtung für den Signalcode angeordnet ist, dahingehend zu verbessern, dass die Codiereinrichtung dazu ausgebildet ist, ein Stromsignal als vorgegebene Signalabfolge von unterscheidbaren Signaleinheiten entsprechend einem Signalcode zu bilden und die Signalabfolge als eine Kette von aneinander anschließenden Signaleinheiten ausgebildet ist, wobei eine Signaleinheit als eine bekannte Folge von zwei oder mehreren ansteigenden oder abfallenden Flanken im Stromverlauf ausgebildet ist.

Das erfindungsgemäße Führungssystem weist eine Stromeinspeisung für einen Bodenleiter und mindestens ein Fahrzeug auf. Es weist weiterhin eine Codiereinrichtung zur Erzeugung eines Signalcodes im Leiterstrom auf. Durch den Leiterstrom wird ein sich räumlich um den Leiter ausbreitendes Magnetfeld erzeugt, welches von einer Empfangseinheit am Fahrzeug erfasst werden kann. Am Fahrzeug ist eine mit der Empfangseinheit verbundene Codeerkennungseinrichtung für den Signalcode angeordnet.

Die Codeerkennungseinrichtung ist dazu ausgebildet, einen über das Magnetfeld übertragenen Signalcode im Empfangssignal zu identifizieren. In Abhängigkeit von dem identifizierten Signalcode kann eine Steuerung des Fahrzeugs erfolgen.

Ein Stromsignal mit einem Signalcode sowie das sich in Abhängigkeit von dem Signalcode ausbreitende Magnetfeld können als Dauersignal oder Intervallsignal vorliegen. Ein solches Dauersignal oder Intervallsignal kann von einer Empfangseinrichtung am Fahrzeug erfasst und bei einem beliebigen Startzeitpunkt beginnend verarbeitet werden. Somit kann eine Signalverarbeitung bei Eintreten des Fahrzeugs in die Sendereichweite um den Leiter sofort erfolgen, ohne dass auf eine spezielle Startsequenz oder einen Initialisierungsimpuls gewartet werden müsste. Gerade bei höheren Fahrzeuggeschwindigkeiten kann so ein unerkanntes Überfahren eines Bodenleiters vermieden werden. Das Führungssystem arbeitet entsprechend besonders reaktionsschnell und unterstützt auch hohe Fahrzeuggeschwindigkeiten.

Das Führungssystem kann eine Führung des Fahrzeugs in unterschiedlicher Weise bewirken. Das Führen kann durch reine Vorgabe einer Fahrtwegbegrenzung mit sonst frei wählbarem Fahrtweg und/oder durch Vorgabe eines festgelegten Fahrtweges erfolgen. Die Führung kann hierbei als Flächenbegrenzungsvorgabe oder als Fahrtwegvorgabe oder als Kombination von Flächenbegrenzungs- und Fahrtwegvorgabe erfolgen.

Die Führung kann beispielsweise dadurch erfolgen, dass das Fahrzeug den Bodenleiter als Grenze eines zu befahrenden Bereichs erkennt. Bei einem Annähern des Fahrzeugs an den Bodenleiter auf einen vorbestimmbaren und erfassbaren Abstand und bevorzugt in nicht paralleler Richtung zum Bodenleiter kann das Fahrzeug selbsttätig eine Richtungsänderung ausführen, sodass es sich wieder vom Bodenleiter wegbewegt. Die Richtungsänderung kann gezielt vorgegeben sein und beispielsweise aus einem festgelegten Fahrplan zum flächigen Abfahren des durch den Bodenleiter eingegrenzten Bereichs berechnet sein. Alternativ kann die Richtungsänderung zufällig erfolgen, sodass ein Abfahren des durch den Bodenleiter abgegrenzten Bereiches nach zufällig gewählten Fahrtwegen erfolgt. Bei einer Bewegung des Fahrzeugs parallel zum Bodenleiter kann das Fahrzeug ebenfalls den konstanten Abstand zum Bodenleiter detektieren und gegebenenfalls eine Richtungsänderung ausführen.

Eine Führung kann auch derart erfolgen, dass das Fahrzeug dem Verlauf des Bodenleiters nachfolgt. So kann beispielsweise ein Bodenleiter einen genau zu befolgenden Fahrweg für das Fahrzeug vorgeben. Durch eine Messung des Abstands zwischen Fahrzeug und Bodenleiter kann das Fahrzeug in einer besonders genauen Spur geführt werden.

Auch Kombinationen der genannten Führungen sind möglich. Beispielsweise kann ein Fahrzeug gegebenenfalls unter Rückgriff auf GPS-Daten oder eine andere Navigationshilfe eigenständig einen Fahrweg zum Abfahren des begrenzten Flächenbereichs wählen und den Bodenleiter als exakt feststellbare Umkehrlinie nutzen. Bei bestimmten Systemzuständen, beispielsweise kurz vor dem Leeren eines Energiespeichers am Fahrzeug oder bei Regen, kann das Fahrzeug von einer Flächenüberquerung auf eine Leiterverfolgung umschalten und beispielsweise dem Verlauf des Bodenleiters in einer vorgegebenen Richtung nachfolgen, um so einen möglichst schnellen Weg zu einer Basisstation zu finden.

In dem Signalcode können Führungsanweisungen für das Fahrzeug übertragen werden. Diese Führungsinformationen können mehreren Zwecken dienen, beispielsweise einer Identifizierung des Bodenleiters und/oder der Übermittlung von Steuerinformationen. Derartige Steuerinformationen können beispielsweise für das oben beschriebene Umschalten des Führungsmodus genutzt werden. Alternativ können die Steuerinformationen für beliebige andere Zwecke genutzt werden, beispielsweise für das Aktivieren eines Bodenbearbeitungswerkzeugs etc.

Durch den eingebrachten Signalcode unterscheidet sich das Stromsignal im Leiter und somit auch das sich in Abhängigkeit des Stromes erzeugte Magnetfeld deutlich von einem reinen harmonischen Signal, wie beispielsweise einem reinen Sinussignal, oder einem Rauschen. Das Stromsignal kann dabei in Umsetzung des Signalcodes aus einer vorbestimmten Abfolge von unterscheidbaren Signaleinheiten zusammengesetzt sein. Eine Signaleinheit kann beispielsweise einem Element in dem Signalcode entsprechen. Die Signaleinheiten lassen sich in dem am Fahrzeug aufgenommenen Empfangssignal identifizieren und in einen Signalcode zurück übersetzen. Durch einen geeigneten Erkennungsalgorithmus kann also aus dem Empfangssignal der darin enthaltene Signalcode extrahiert werden. Durch die Codierung des Stromsignals auf dem Leiter und die Erkennung des Signalcodes am Fahrzeug werden unterschiedliche Vorteile geschaffen.

Werden beispielsweise mehrere elektrische Leiter mit mehreren Signalquellen in räumlicher Nähe zueinander angeordnet, besteht durch die Verwendung von Signalcodes die Möglichkeit für ein Fahrzeug, bei Annäherung an einen elektrischen Leiter, die mit dem Leiter verbundene Signalquelle zu identifizieren. Auf diese Weise kann also ein Fahrzeug erkennen, an welchen Leiter es sich annähert und in Abhängigkeit von dieser Information vorbestimmte Reaktionen ausführen. Dies kann beispielsweise für eine größere Zahl von Förderfahrzeugen in einer Produktionsumgebung genutzt werden, wobei unterschiedliche Transportlinien geschaffen werden und ein Fahrzeug die Linien unterscheiden und je nach Steuervorgabe abfahren kann. Die Transportlinien können hierbei gleichzeitig oder abwechselnd von einem Fahrzeug oder von mehreren Fahrzeugen und gegebenenfalls überschneidend bedient werden.

Wird andererseits ein Führungssystem mit einer Signalquelle aber mit mehreren Fahrzeugen verwendet, so kann durch das Versenden von unterschiedlichen Signalcodes auf dem Leiter die Übermittlung von Anweisungen an ein oder mehrere Fahrzeuge erfolgen.

Je nach Wahl des einen oder der mehreren verwendeten Signalcodes im Führungssystem können die Identifikationsfunktion und die Anweisungsübertragung auch kombiniert und gleichzeitig oder abwechselnd genutzt werden. Grundsätzlich ist durch die Verwendung von Signalcodes also eine Möglichkeit geschaffen, zusätzlich zu einer Führungsfunktion über den Leiterstrom auch einen Nachrichtenaustausch und eine Identifikationsfunktion zu ermöglichen. Für einen Nachrichtenaustausch zwischen einer Stromeinspeisung oder einer Basisstation und einem Fahrzeug kann somit auf die Anbringung eines separaten Kommunikationssystems vorteilhafter Weise verzichtet werden.

Die vorgenannten Einsatzmöglichkeiten stellen lediglich eine beispielhafte Nennung von Vorteilen dar. Dem Fachmann sind vielfältige andere Anwendungsmöglichkeiten ersichtlich, die aus der Verwendung von Signalcodes im Leiterstrom erwachsen und die jeweils eigene Vorteile mit sich bringen können. So können die Signalcodes auch zur Diebstahlsicherung genutzt werden, sodass ein Fahrzeug, das auf ein bestimmtes Führungssystem eingestellt ist, nicht mit anderen Stromeinspeisungen oder Basisstationen arbeitet.

Durch die Verwendung eines Signalcodes im Stromsignal wird auch eine Signal-Rauschen-Unterscheidung verbessert. Jede der Signaleinheiten kann für sich aus mehreren identifizierbaren Signalwerten bestehen, wie beispielsweise aus einer Folge von mehreren steigenden oder fallenden Flanken im Schleifenstrom, die sich im Empfangssignal als Folge von mehreren positiven oder negativen Peaks erkennen lassen. Durch die Zusammenfassung von mehreren identifizierbaren Signalwerten zu einer Signaleinheit wird die Erkennung und Verarbeitung des Empfangssignals robuster. Der Grad der energetischen Unterscheidung eines aus Signaleinheiten gebildeten Empfangssignals von einem Grundrauschen oder von Störsignalen ist aufgrund der mehreren in einer Signaleinheit enthaltenen Signalwerte leichter auszuwerten. Da eine gute Unterscheidbarkeit des Empfangssignals gegenüber Rauschen oder Störsignalen durch die Signalstruktur wesentlich verbessert wird, kann das erfindungsgemäße Führungssystem mit vergleichsweise geringen Sendeenergien für den Leiterstrom arbeiten. Hierdurch wird eine gegenseitige Beeinflussung von mehreren elektrischen Leitern reduziert und der Energieverbrauch ist besonders niedrig.

An einem Fahrzeug ist bevorzugt eine mit einem Sensor verbundene Auswerteeinrichtung angeordnet, die aus den vom Leiter empfangenen Strom- und/oder Spannungsverläufen eine örtliche Relativbeziehung des Sensors gegenüber dem Leiter ermittelt. Der Sensor kann bevorzugt ein Magnetfeldsensor sein und ist grundsätzlich bekannt.

Eine zu ermittelnde örtliche Relativbeziehung kann unterschiedlichen Aussagegehalt haben. Sie kann beispielsweise in einer digitalen Unterscheidung der Position des Fahrzeugs bzw. des Sensors im Vergleich zum Leiter bestehen, wie beispielsweise in der Information, dass das Fahrzeug bzw. der Sensor innerhalb oder außerhalb des Leiters ist, bzw. rechts oder links vom Leiter mit Bezug auf eine erkennbare Grundrichtung. Alternativ oder zusätzlich kann eine örtliche Relativbeziehung in einer Messgröße für die laterale Entfernung des Fahrzeugs bzw. des Sensors vom Leiter ausgedrückt sein.

Mit dem erfindungsgemäßen Führungssystem sind zwei Betriebszustände für eine Fahrzeugführung möglich, die einzeln, abwechselnd oder kombiniert nutzbar sind. Dies ist einerseits ein Betrieb, bei dem ein Fahrzeug einem Schleifenverlauf genau folgt. In diesem Fall kann die Ermittlung des lateralen Abstands des Fahrzeugs bzw. des Sensors zum Leiter genutzt werden, um auf eine genaue Spurverfolgung zu regeln. Andererseits ist ein Betrieb möglich, bei dem ein Fahrzeug einen von einem Leiter abgegrenzten Flächenbereich beispielsweise vollflächig abfährt. In einem solchen Betrieb kann die Erkennung der Position des Fahrzeugs als innerhalb oder außerhalb des Leiters genutzt werden, um das Fahrzeug von einem Verlassen des Flächenbereichs zu bewahren. Innerhalb des Flächenbereichs kann die Fahrzeugführung beispielsweise nach einer Zufallswegfindung oder in beliebiger anderer Weise erfolgen.

Das Fahrzeug kann eine mit der Auswerteeinrichtung verbundene Steuereinrichtung haben, die das Fahrzeug anhand der übermittelten Informationen der Auswerteeinrichtung steuert und einen oder mehrere Betriebszustände annimmt. Das Fahrzeug kann dabei bevorzugt mit einem Bodenbearbeitungswerkzeug ausgestattet sein, das gegebenenfalls von der Steuereinrichtung mitgesteuert wird.

So kann die Aufgabe eines Fahrzeugs beispielsweise sein, einen von einem Bodenleiter abgegrenzten Flächenbereich vollflächig abzufahren und dabei zu mähen. Das Fahrzeug kann hierbei bevorzugt als Mähroboter ausgebildet sein und ein Bodenbearbeitungswerkzeug in Form eines Mähwerkzeugs tragen. Die Wegfindung zum Abfahren eines zu bearbeitenden Flächenstücks kann in diesem Fall bevorzugt über einen per Zufallsgenerator gewählten Bewegungsablauf erfolgen, wobei das Fahrzeug bei Annäherung an einen Leiter seine Richtung derart wechselt, dass es sich wieder von dem Leiter wegbewegt und so stets innerhalb des vom Leiter begrenzten Bereichs bleibt.

Alternativ oder zusätzlich kann ein Bewegungsablauf des Mähroboters so gewählt sein, dass es bei Erkennung eines Bodenleiters dessen Verlauf exakt nachfährt. Ein solches Abfahren des Bodenleiters kann beispielsweise bei einem niedrigen Batteriestand oder vollem Mähgutspeicher genutzt werden, um ein Fahrzeug zielgerichtet zu einer Ladestation oder einer Basisstation zu führen.

Durch Verwendung unterschiedlicher vorbestimmter Signalcodes kann über den Bodenleiter auch eine Anweisung an ein oder mehrere Fahrzeuge gegeben werden, zwischen unterschiedlichen Bewegungsabläufen umzuschalten oder den Betrieb eines Bodenbearbeitungswerkzeugs in bestimmter Weise zu steuern.

Weitere vorteilhafte Ausbildungen der Erfindung sind in den Unteransprüchen angegeben.

Die Erfindung ist in den Zeichnungen beispielsweise und schematisch dargestellt. Es zeigen:

Figur 1: eine schematische Darstellung eines Führungssystems mit einem Fahrzeug.

Figur 2: eine Funktionsskizze zur sensorischen Erfassung eines Magnetfelds um einen Bodenleiter.

Figur 3: eine Beispieldarstellung zum Verlauf der vertikalen Flussdichte in Abhängigkeit vom lateralen Abstand zum Leiter.

Figur 4: eine Vergleichsdarstellung von codierten Sende- und Empfangssignalen.

Figur 5: eine erweiterte Darstellung in der Art von Figur 4 mit Hervorhebung eines Signalcodes.

Figur 6: eine Prinzipdarstellung zur Ermittlung eines Signalcodes durch Vergleich eines erwarteten Tupels mit einem geshifteten Messwerttupel.

Figur 7: eine Erläuterungsdarstellung zur Bildung von geshifteten Tupeln und zur Errechnung von geshifteten Skalarprodukten.

Figuren 8a,b,c: Vergleichsdarstellungen möglicher Signaleinheiten in Sende- und Empfangssignal.

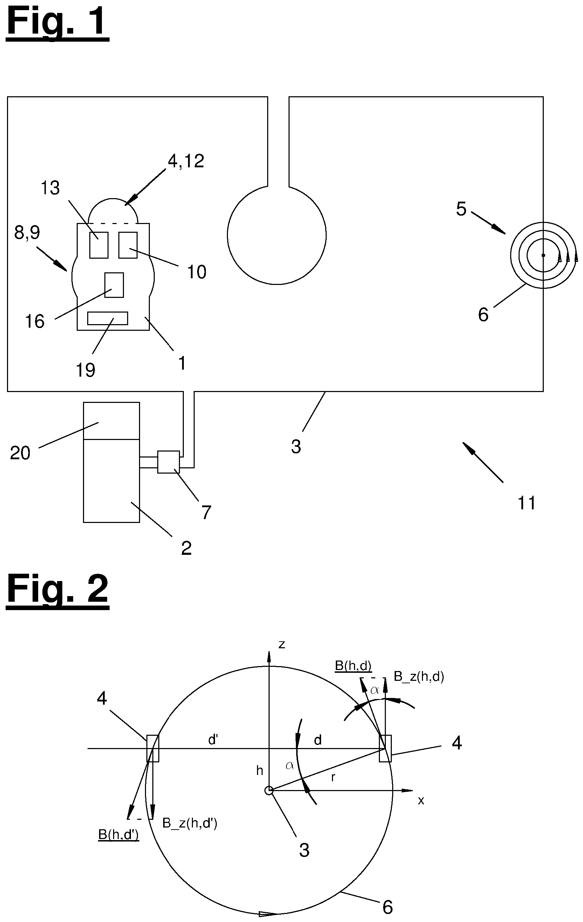

Die Erfindung betrifft ein Führungssystem (11) für steuerbare Fahrzeuge (1), wobei das Führungssystem (11) einen außerhalb des Fahrzeugs (1) angeordneten elektrischen Leiter (3), insbesondere ein Bodenkabel, und eine Stromeinspeisung (2) für den Leiter (3) aufweist. Ein solches Führungssystem (11) ist beispielhaft in **Figur 1** dargestellt. An dem Fahrzeug (1) ist eine Empfangseinheit (12) für das elektromagnetische Feld des Leiterstroms angeordnet.

Das Führungssystem (11) weist eine Codiereinrichtung (7) zur Erzeugung eines Signalcodes (15) im Leiterstrom auf, und am Fahrzeug (1) ist eine mit der Empfangseinheit (12) verbundene Codeerkennungseinrichtung (10) für den Signalcode (15) angeordnet. In dem Leiter (3) wird durch die Stromeinspeisung (2) ein Leiterstrom als Signalstrom (21) erzeugt, in dem ein Signalcode (15) enthalten ist. In Abhängigkeit von dem Leiterstrom bildet sich um den Leiter (3) herum ein Magnetfeld (5) aus, das durch Feldlinien (6) dargestellt ist. An dem Fahrzeug (1) sind ein oder mehrere Sensoren (4) angeordnet, die zur Erfassung des vertikalen Anteils $B_z$ der magnetischen Flussdichte B des Magnetfelds (5) ausgebildet sind. Der eine oder die mehreren Sensoren (4) sind bevorzugt der Empfangseinheit (12) zugeordnet.

Zur Erläuterung der physikalischen Zusammenhänge der Signalübertragung ist in **Figur 2** ein Leiter (3) im Querschnitt dargestellt, um den sich ein Magnetfeld (5) ausbreitet, welches repräsentativ durch eine Feldlinie (6) dargestellt ist. Ein Leiter (3) ist bevorzugt auf oder im Erdreich verlegt. Alternativ kann ein Leiter (3) auch über dem Boden verlaufen. Hierbei ist es vorteilhaft, wenn der Leiter stets den gleichen vertikalen Abstand vom Boden hat. Im Folgenden wird davon ausgegangen, dass ein Leiter im Boden verlegt wird, wobei die weiteren Ausführungen in entsprechender Weise für andere Verlegungsformen des Leiters gelten.

Ein am Fahrzeug befindlicher Sensor (4) ist üblicherweise in einer bekannten und bevorzugt konstanten Höhe h über oder unter dem Leiter (3) bewegt. Der Sensor (4) auf der rechten Seite von Figur 2 befindet sich darstellungsgemäß in einem lateralen Abstand d vom Leiter (3). Die radiale Entfernung des Sensors (4) vom Leiter (3) ist mit r gekennzeichnet. Für die Flussdichte B gilt die folgende Beziehung in Abhängigkeit des Leiterstroms I und des radialen Abstands r:

$$B(r) = \frac{\mu I}{2\pi r}$$

$\mu$ ist dabei die magnetische Permeabilität.

Der Sensor (4) ist bevorzugt derart ausgerichtet, dass er nur den vertikalen Anteil $B_z$ der Flussdichte B erfasst. Für den vertikalen Anteil $B_z$ der Flussdichte gilt die folgende Beziehung:

$$B_z(x, z) = B(r) * \cos(\alpha)$$

Wendet man diese Beziehung auf die in Figur 2 auf der rechten Seite dargestellte Sensorposition (x=d, z=h) an, so ergibt sich für die vertikale Flussdichte:

$$B_z(d, h) = \frac{\mu I}{2\pi r} * \frac{d}{r}$$
$$= \frac{\mu I}{2\pi} * \frac{d}{r^2}$$
$$= \frac{\mu I}{2\pi} * \frac{d}{h^2 + d^2}$$
$$= a * \frac{d}{h^2 + d^2}$$

mit

$$a = \frac{\mu I}{2\pi}$$

Die Größe a stellt hierbei einen Kalibrierungsfaktor dar, der bei einer Erstinitialisierung eines Fahrzeugs (1) erfasst und abgespeichert werden kann.

Die erste Ableitung der vertikalen Flussdichte $B_z$' nach dem Weg x an der Position (x=d, z=h) hat den folgenden Wert:

$$B_z'(d, h) = a * \frac{(h^2 + d^2) * 1 - d(0 + 2d)}{(h^2 + d^2)^2}$$

$$= a * \frac{h^2 - d^2}{(h^2 + d^2)^2}$$

Nimmt man nun an, dass der Sensor (4) in einer Position zum Leiter (3) sei, bei der der Abstand x gleich der Höhe h ist und auch die Höhe des Sensors (4) über dem Leiter (3) gleich h ist (also x=h, z=h), was einer Position des Sensors in einem 45°-Winkel über dem Boden zum Leiter (3) entspricht, so wird die erste Ableitung der vertikalen Flussdichte nach dem Weg $B_z'$ zu Null:

$$B_z'(\pm h, h) = 0$$

$$\Rightarrow Extremwert\ bei\ x = \pm h\ und\ z = h$$

Folglich ist bei Abstand (x = ±h) des Sensors (4) zum Leiter (3) ein lokales Maximum oder Minimum in der gemessenen vertikalen Flussdichte $B_z$ zu erwarten. Der Betrag dieses Maximums bzw. Minimums hat einen konstanten Wert und ist:

$$|B_{z,max}| = |B_z(h, h)| = a * \frac{h}{h^2 + h^2} = \frac{a}{2h}$$

Andererseits ergibt sich aus einer Betrachtung der ersten Ableitung der vertikalen Flussdichte nach dem Weg $B_z'$ an der Position (x = 0), also bei einer Positionierung des Sensors (4) direkt über dem Leiter (3), die folgende maximale Steigung:

$$B_z'(0, h) = a * \frac{h^2 - 0^2}{(h^2 + 0^2)^2} = \frac{a}{h^2} = \frac{2}{h} B_z(h, h)$$

Wurde die maximale Flussdichte $B_z$ an der Position (x=h, z=h) also ermittelt, kann daraus die zu erwartende Steigung der gemessenen Flussdichte im Nulldurchgang ermittelt werden.

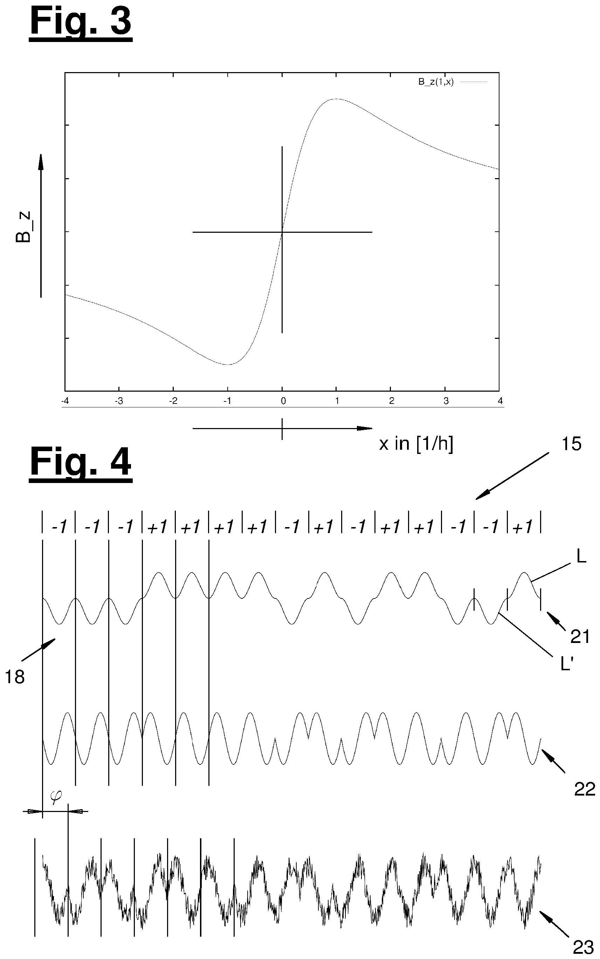

**Figur 3** zeigt beispielhaft den Verlauf der vertikalen Flussdichte $B_z$ bei konstanter Höhe (z=h) und in Abhängigkeit vom Abstand x des Sensors (4) vom Leiter (3). Es ist leicht zu erkennen, dass die vertikale Flussdichte $B_z$ in einem Bereich von etwa x = ½h bis x = +½h einen nahezu linearen Verlauf zeigt. Der Verlauf der Flussdichte $B_z$ kann in diesem Bereich durch eine Geradengleichung angenähert werden, wobei die Steigung der Geraden aus der o.g. ersten Ableitung der vertikalen Flussdichte $B_z'$ an der Position x = 0 nach dem genannten Prinzip ermittelbar ist. Es ergibt sich somit die folgende Näherungsbeziehung für den Zusammenhang zwischen gemessener, maximaler Flussdichte am Sensor (4) und lateralem Abstand x des Sensors vom Leiter (3):

$$B_z^{\sim}(x) = \frac{2}{h} B_z(h, h) * x$$

Löst man diese Beziehung nach dem gesuchten Abstand x auf und setzt die gemessene vertikale Flussdichte $B_{z,gemessen}$ ein, so ergibt sich die folgende Beziehung zur Ermittlung des gesuchten Abstands x:

$$x = \frac{h}{2 * B_z(h, h)} * B_{z,gemessen}^{\sim}$$

Die so linearisierte Beziehung kann genutzt werden, um ein Fahrzeug (1) genau den Verlauf eines Bodenleiters (3) nachverfolgen zu lassen. Ein besonders einfaches Regelungskonzept kann darauf abzielen, das Fahrzeug mit dem Sensor (4) in dem genannten Linearisierungsstreifen der Breite x = ±½h um den Leiter (3) zu bewegen und das Fahrzeug derart zu steuern, dass der Betrag der gemessenen vertikalen Flussdichte $B_z$ minimal wird.

Die genannten physikalischen Zusammenhänge sind prinzipiell unabhängig von der Verwendung eines Signalcodes. Die Auswertung der gemessenen Flussdichte kann für die Führung des Fahrzeugs (1) alternativ oder zusätzlich zur Auswertung des Signalcodes (15) erfolgen. Im Weiteren soll zunächst anhand eines Beispiels erläutert werden, welche zusätzlichen Vorteile die Verwendung eines Signalcodes (15) im Leiterstrom schafft.

In **Figur 4** sind beispielhafte Verläufe für ein Stromsignal (21) mit einer vorbestimmten Signalabfolge (18), für ein idealerweise zu erwartendes Empfangssignal (22) und für ein gegebenenfalls tatsächlich gemessenes Empfangssignal (23) dargestellt und einander gegenübergestellt. Über den Signalverläufen ist ein Signalcode (15) in Form eines Wertetupels aus Einzelwerten von +1 und -1 dargestellt. Der hier dargestellte Signalcode ist willkürlich gewählt und dient lediglich der Verdeutlichung. Ein Signalcode (15) kann grundsätzlich beliebig gewählt werden und sich von dem dargestellten Signalcode (15) unterschieden.

Es kann vorteilhaft sein, den Signalcode (15) als Folge von sog. Pseudozufallszahlen, wie beispielsweise nach einer sog. Gold-Folge zu bilden. Der Signalcode kann dabei bevorzugt eine Anzahl mindestens n ≥ 2 Elementen haben, wobei mindestens ein +1 und ein -1 Element enthalten sein müssen. Die Anzahl der Elemente n kann gerade oder ungerade gewählt sein.

Die Codeerkennungseinrichtung und der verwendete Erkennungsalgorithmus können grundsätzlich beliebig gewählt sein. Je nach technischer Ausführung der Codeerkennungseinrichtung und des verwendeten Erkennungsalgorithmus können mit bestimmten Elementanzahlen n und der Wahl von bestimmten Pseudozufallszahlen besondere Vorteile erreicht werden. Wird beispielsweise der weiter unten beschriebene Erkennungsalgorithmus über Bildung eines geshifteten Skalarproduktes verwendet, so ist es besonders vorteilhaft, die Elementzahl n als ungerade Zahl zu wählen und um jeweils 1 kleiner als eine Zweierpotenz zu wählen (d.h. n = $2^k$-1, mit k als Element der natürlichen Zahlen), also beispielsweise n = 3, n = 15, n = 31, n = 63 usw. Für den Signalcode (15) wird besonders bevorzugt eine sog. Gold-Folge gewählt. Die Gold-Folgen und andere geeignete Pseudozufallszahlen sind in der Mathematik bekannt.

Das in Figur 4 dargestellte Sendesignal (21) ist als repräsentatives Beispiel gewählt und weist eine vorbekannte Abfolge (18) von unterscheidbaren Signaleinheiten (L,L') auf. An jeder Stelle des Signalcodes (15), an der der Wert -1 steht, wird in dem Sendesignal (21) eine Signaleinheit (L') erzeugt, und an jedem Element +1 eine Signaleinheit (L). Eine Signaleinheit (L) besteht hier beispielsweise aus einer steigenden und einer fallenden Flanke. Eine Signaleinheit L' besteht hingegen aus einer fallenden und einer steigenden Flanke. Weiter unten werden mögliche Signalfolgen und deren Vorteile genauer diskutiert und beschrieben. Hier sei angenommen, dass der Verlauf einer Signaleinheit (L) in einer vollen Periode der folgenden Gleichung genügt:

$$I(L) = I_0 * (1 - \cos(\omega t))$$

Der Verlauf einer Signaleinheit L' genüge in einer vollen Periode der Gleichung:

$$I(L') = I_0 * (\cos(\omega t) - 1)$$

Bei einem Sensor (4), der über eine induzierte Spannung ein Magnetfeld misst, welches über einen Signalstrom in einem Leiter (3) erzeugt wird, ist idealerweise zu erwarten, dass die Höhe der induzierten Spannung proportional ist zur Änderung des Signalstroms, also zur Steigung des Signalstroms. Dementsprechend ist bei dem in Figur 4 dargestellten Sendesignal (21) zu erwarten, dass sich an einem Sensor (4) idealerweise das erwartete Empfangssignal (22) ausbildet. An den Stellen, bei denen die Steigung des Sendesignals (21) minimal bzw. maximal ist, tritt in dem erwarteten Empfangssignal (22) ein Minimum bzw. ein Maximum auf. An den Stellen, an denen in dem Sendesignal (21) ein lokales Extremum auftritt, ist der Betrag des erwarteten Empfangssignals (22) gleich Null.

Dort, wo im Signalcode (15) ein Wert -1 vorliegt und demnach in dem Sendesignal eine Signaleinheit L' auftritt, liegt in dem erwarteten Empfangssignal (22) eine Folge von einem Minimum und einem Maximum vor. Bei einer +1 im Signalcode (15) ist hingegen eine Folge von einem Maximum und einem Minimum zu erwarten. Der Zusammenhang zwischen einem Wert des Signalcodes (15), einer Signaleinheit (L,L') und der entsprechenden zu erwartenden Signalfolge in dem erwarteten Empfangssignal (22) kann von einem Fachmann leicht auf andere Formen von Signaleinheiten (L,L') übertragen werden.

Wie aus Figur 4 ersichtlich ist, entspricht ein gemessenes Empfangssignal (23) im Allgemeinen nicht exakt einem idealerweise erwarteten Empfangssignal (22). Ein gemessenes Empfangssignal (23) kann insbesondere mit einem Rauschen behaftet sein und zu einem Sendesignal (21) um einige Signaleinheiten (L,L) sowie elementweise um

einen Winkel φ phasenverschoben sein.

Grundsätzlich muss auch keine Synchronisation zwischen einer Stromeinspeisung (2) bzw. einer Codiereinrichtung (7) und einem Fahrzeug (1) bestehen. Dementsprechend ist zu Beginn ein über die Empfangseinheit (12) bzw. einen Sensor (4) gemessenes Empfangssignal (23) ohne bekannten Zeitbezug zum Start einer Signalabfolge im Sendesignal (21). Es ist demnach gegebenenfalls Aufgabe einer Codeerkennungseinrichtung (10), das Vorhandensein eines Signalcodes (15) im gemessenen Empfangssignal (23) zu erkennen.

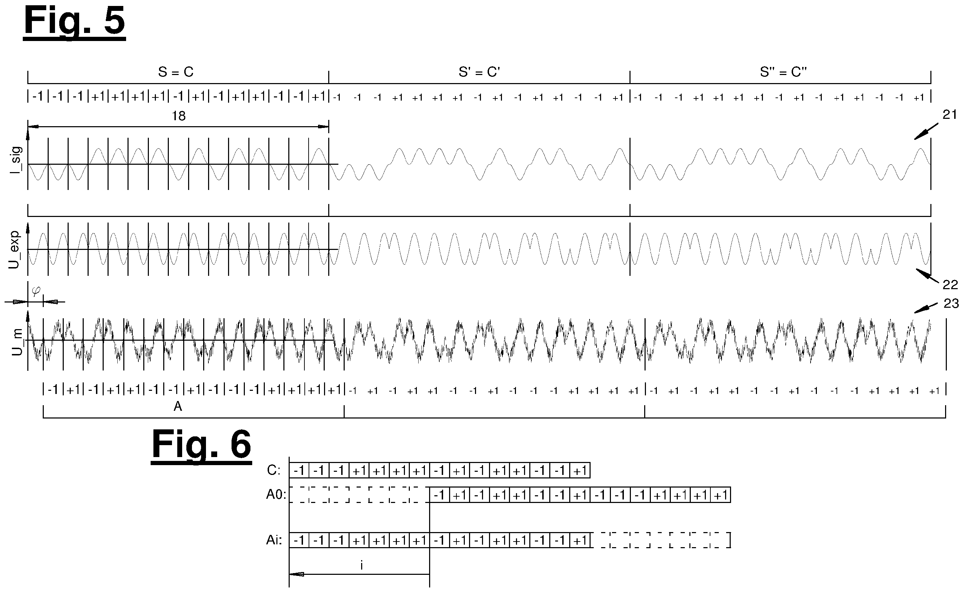

**Figur 5** zeigt über einen längeren Zeitraum die Verläufe eines Sendesignals (21), eines erwarteten Empfangssignals (22) und eines gemessenen Empfangssignals (23). Es ist dabei zu beachten, dass das gemessene Empfangssignal (23) über einen unbekannten Zeitbezug im Vergleich zu den Signalen (21,22) verfügt. Das gemessene Empfangssignal (23) ist daher bezogen auf die Signale (21,22) als beliebig verschoben dargestellt.

Durch einen geeigneten Erkennungsalgorithmus kann in dem gemessenen Empfangssignal (23) eine Abfolge von Signaleinheiten erkannt und in ein entsprechendes Messwerttupel A umgesetzt werden. Derartige Erkennungsalgorithmen sind in der Technik grundsätzlich bekannt. Eine Erkennung kann in beliebig geeigneter Weise erfolgen, beispielsweise dadurch, dass in einem Zeitraum, der der Dauer einer Signaleinheit (L,L') entspricht, vier Abtastungen auf dem gemessenen Empfangssignal (23) erfolgen, wobei vier Einzelwerte aufgenommen werden. Die Abtastrate entspricht also beispielsweise der vierfachen Signalfrequenz.

$$u_i = U\left(t_0 + \frac{iT}{4}\right)$$

Zwischen zwei Abtastungen liegt somit ein Phasenwinkel von 90 Grad. Zwischen dem Signalbeginn und dem ersten Abtastzeitpunkt kann allerdings eine beliebige Phasenverschiebung bestehen. Der nächste Abtastzeitpunkt nach (wiederholtem) Beginn des Signals liegt aber innerhalb der ersten Viertelperiode des Signals (innerhalb der ersten 90 Grad).

Aus jeweils vier aufeinander folgenden Abtastwerten $u_i$, $u_{i+1}$, $u_{i+2}$, $u_{i+3}$ wird ein Schätzwert b für die aktuelle Amplitude und ein Schätzwert φ für die relative Phasenlage des Sensorsignals nach der folgenden Beziehung angenommen:

$$b * \sin\left(\frac{i\pi}{2} + \varphi\right)$$

mit:

$$b = \frac{1}{2}\sqrt{(u_i - u_{i+2})^2 + (u_{i+1} - u_{i+3})^2}$$

$$\varphi = arctan\frac{u_i - u_{i+2}}{u_{i+1} - u_{i+3}}$$

In der Technik sind auch andere Abtastverfahren und entsprechende Erkennungsalgorithmen bekannt. Der vorgenannte Algorithmus stellt lediglich ein Beispiel zur Erläuterung dar. Der Fachmann kann in Abhängigkeit der Form einer gewählten Signaleinheit L, L' ein entsprechend geeignetes Erkennungsverfahren auswählen.

Das in Figur 5 dargestellte Messwerttupel A stellt wiederum eine Abfolge von -1- und +1-Werten dar. Die Anzahl der Elemente n in der Messwertfolge A ist bevorzugt identisch zu der Anzahl der Elemente n in dem Signalcode (15) im Sendesignal (21).

Eine Codeerkennungseinrichtung (10) ist bevorzugt dazu ausgebildet, den codierten Signalinhalt des gemessenen Empfangssignals (23) aufzubereiten. Ein erster Schritt der Signalaufbereitung kann bevorzugt über die vorbeschriebene Abtastung erfolgen. In einem weiteren Schritt kann beispielsweise durch einen Shifting-Algorithmus und die Bildung eines geshifteten Skalarproduktes $Z_i$ die Übereinstimmung eines geshifteten Messwerttupels $A_i$ mit einem Vergleichstupel C ermittelt werden. Ein Vergleichstupel entspricht dabei bevorzugt einem vorbekannten Signalcode (15). Eine Codeerkennungseinrichtung (10) kann also feststellen, ob ein vorbekannter Signalcode (15) in dem Empfangssignal (23) enthalten ist.

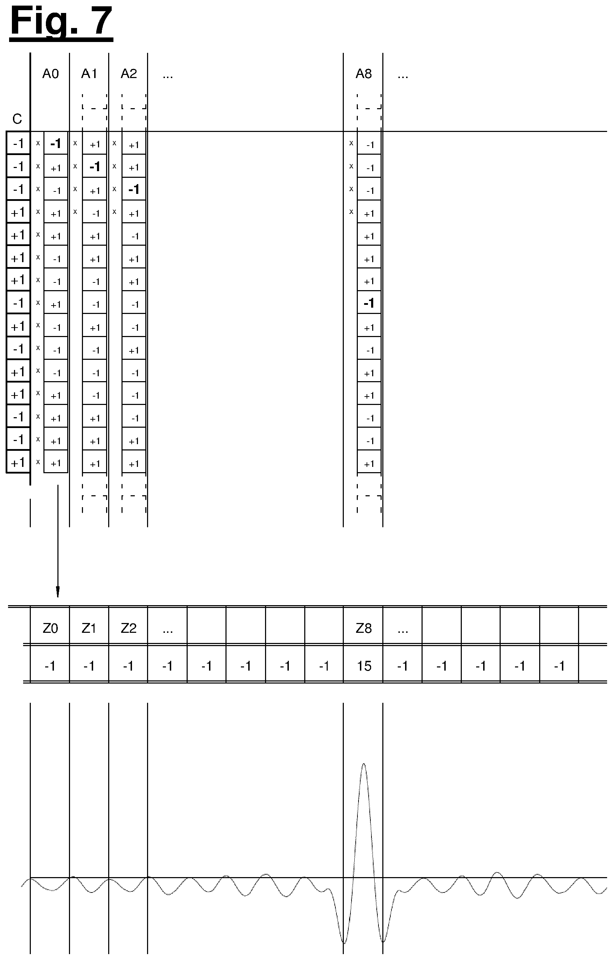

Figur 7 verdeutlicht beispielhaft ein solches Verfahren für ein bekanntes Vergleichstupel C und mehrere geshiftete Messwerttupel $A_0, A_1, A_2, ....$ Das Vergleichstupel C entspricht hier dem in Figur 5 dargestellten vorbekannten Sig-

nalcode (15). Das Messwerttupel $A_0$ entspricht einer Folge von Werten (+1,-1), die aus einem gemessenen Empfangssignal (23) erkannt wurden. Geht man davon aus, dass ein Sendesignal (21) eine ständige Wiederholung einer vorbekannten Signalabfolge (18) in Entsprechung zu einem vorbekannten Signalcode (15) darstellt, so ist zu erwarten, dass ein aus dem gemessenen Empfangssignal (23) gebildetes Messwerttupel $A_0$ eine Abfolge von Werten bildet, die in ihrer Reihenfolge den Werten der vorbekannten Signalabfolge (18) entsprechen, zu dieser jedoch um eine zunächst unbekannte Shiftweite i verschoben sind. **Figur 6** verdeutlicht diesen Umstand. Es ist dort beispielhaft eine Signalabfolge (18) in dem erwarteten Messwerttupel (=Vergleichstupel) C dargestellt. Darunter ist das Messwerttupel $A_0$ dargestellt, welches in dem Überschneidungsbereich der Tupel C und $A_0$ die identischen Werte zeigt. Allerdings sind die Werte am Ende des Messwerttupels $A_0$ im Vergleich zu dem Vergleichstupel C verschoben. Wird das Messwerttupel $A_0$ um die Shiftweite i elementweise verschoben, wobei jeweils ein Element vom Ende des Messwerttupels $A_0$ an dessen Anfang übertragen wird, so entsteht das geshiftete Messwerttupel $A_i$. Gesucht wird dasjenige geshiftete Messwerttupel $A_i$, welches zu dem erwarteten Messwerttupel C ähnlich ist. Eine Ähnlichkeit kann insbesondere in einer identischen Folge der Vorzeichen der Tupelelemente bestehen.

Um herauszufinden, welches geshiftete Messwerttupel $A_i$ mit einem Vergleichstupel C identisch ist, kann für jedes geshiftete Messwerttupel $A_i$ mit dem Vergleichstupel C ein Skalarprodukt gebildet werden. Ein Skalarprodukt $Z_i$ ist dabei die Summe der elementweise gebildeten Produkte von je einem Element aus dem geshifteten Tupel $A_i$ und einem Element aus dem Vergleichstupel C. **Figur 7** erläutert beispielhaft eine Bildung von Skalarprodukten $Z_i$. In der oberen Hälfte von Figur 7 sind linksseitig ein bekanntes Vergleichstupel C und daneben jeweils eine steigende Shiftweite i geshiftete Messwerttupel $A_0, A_i, A_2$ ... dargestellt. In der unteren Hälfte von Figur 7 sind die Werte der zugehörigen Skalarprodukte $Z_0, Z_i, Z_2$ ... dargestellt. Ein Skalarprodukt $Z_i$ wird nach der folgenden Formel gebildet:

$$Z_i = \sum_{j=1}^{n} (C[j] * A_i[j])$$

Für die Bildung des Skalarproduktes $Z_0$ wird also jeweils das erste Element des Vergleichstupels C mit dem ersten Element des Messwerttupels $A_0$ multipliziert. Daraufhin wird das zweite Element des Vergleichstupels C mit dem zweiten Element des Messwerttupels $A_0$ multipliziert und das Ergebnis zu dem Elementprodukt der vorherigen Rechnung addiert. Das Skalarprodukt $Z_0$ ist die Summe aller solchen n elementweise gebildeten Produkte.

Zur Bildung des geshifteten Skalarprodukts $Z_i$ wird nun dasselbe Vorgehen auf Vergleichstupel C und das um i = 1 geshiftete Messwerttupel $A_1$ angewandt. Wie aus den Werten der geshifteten Skalarprodukte $Z_i$ in Figur 7 ersichtlich ist, wird der Wert des geshifteten Skalarproduktes bei Ähnlichkeit des Vergleichstupels C und des geshifteten Messwerttupels $A_i$ maximal. In dem in Figur 7 dargestellten Beispiel tritt ein solches Maximum für die Shiftweite i = 8 auf, so dass der Wert des geshifteten Skalarproduktes $Z_8$ ein Maximum von +15 aufweist.

Mit dem vorgenannten Erkennungsalgorithmus ist es vorteilhafterweise möglich, auf einfache und robuste Weise zu erkennen, ob ein vorbekannter Signalcode (15) in einem gemessenen Empfangssignal (23) enthalten ist. Bei der Beschreibung des Erkennungsalgorithmus wurde vereinfachend angenommen, dass die Werte in einem Messwerttupel A jeweils einen Betrag von $\pm 1$ aufweisen. Es ist jedoch auch möglich, einen Erkennungsalgorithmus derart auszuführen, dass der Betrag eines Elements in einem Messwerttupel A die Höhe der induzierten Spannung wiedergibt und das Vorzeichen eines Elements in einem Messwerttupel A angibt, ob eine Signaleinheit L oder eine Signaleinheit L' erkannt wurde. In einem solchen Fall wird bei Bildung eines geshifteten Skalarprodukts betragsmäßig über die Höhen der induzierten Spannungswerte bei mehreren Messwerten gemittelt. Der Maximalwert des geshifteten Skalarproduktes $Z_i$ ist somit proportional zur mittleren induzierten Spannung.

Das Vorzeichen des Maximums des geshifteten Skalarprodukts gibt eine Aussage darüber, ob sich der Sensor des Fahrzeugs innerhalb oder außerhalb des Leiters befindet. Die Werte der geshifteten Skalarprodukte $Z_i$ und insbesondere deren Betrag und Vorzeichen bei einem Extremwert geben somit Auskunft über das Vorhandensein eines vorbekannten Signalcodes (15) in einem gemessenen Empfangssignal (23), sowie über eine örtliche Relativbeziehung des Fahrzeugs (1) bzw. des Sensors (4) gegenüber dem Leiter (3).

Die oben aufgezeigten Verfahren und Algorithmen zur Erkennung eines Signalcodes im Leiterstrom und zur Aufbereitung eines Signalinhalts stellen lediglich Beispiele dar. Je nach Ausbildung und Einsatzzweck des Führungssystems können sie durch andere bekannte Verfahren und Algorithmen ersetzt werden. Entsprechend kann eine am Fahrzeug (1) ausgebildete Auswerteeinrichtung (13) angepasst sein.

Eine Codeerkennung kann ein empfangenes Signal mit mehreren vorbekannten Signalcodes (15) vergleichen und so feststellen, welcher der Codes in dem empfangenen Signal enthalten ist. Auf diese Weise kann je nach erkanntem Signalcode (15) eine andere Führungs- oder Steuerinformation erkannt werden.

An einem Fahrzeug (1) ist bevorzugt eine mit der Auswerteeinrichtung (13) verbundene Steuereinrichtung (16) angeordnet, die das Fahrzeug (1) anhand der übermittelten Informationen und der Auswerteeinrichtung (13) steuert. Eine solche Steuereinrichtung (16) kann beispielsweise eine Lenkeinrichtung aufweisen, mit der die Bewegung des Fahrzeugs gesteuert werden kann. Das Fahrzeug kann bevorzugt Antriebs- und Lenkräder aufweisen. Das Fahrzeug (1) verfügt weiter bevorzugt über einen Antrieb (19), insbesondere einen schaltbaren oder steuerbaren Fahrantrieb, und hat einen Energiespeicher, insbesondere für einen oder mehrere Antriebe (19) .

In einer besonders bevorzugten Ausführungsform der Erfindung trägt ein Fahrzeug (1) ein Bearbeitungswerkzeug (8), insbesondere ein Bodenbearbeitungswerkzeug (9). Ein solches Fahrzeug (1) kann beispielsweise als Mähroboter ausgebildet sein. Ein Bodenbearbeitungswerkzeug (9) kann dementsprechend ein Mähwerkzeug sein. Alternativ kann ein Bodenbearbeitungswerkzeug (9) auch ein Vertikutierwerkzeug sein. Ein Fahrzeug (1) kann auch als Reinigungsfahrzeug ausgebildet sein. Dementsprechend kann ein Bodenbearbeitungswerkzeug (9) als Reinigungswerkzeug ausgebildet sein.

Das Fahrzeug (1) verfügt in den o.g. Fällen bevorzugt über eine Steuereinrichtung (16), die eine Steuerung für ein Bearbeitungswerkzeug (8) aufweist. Die Steuereinrichtung (16) kann dazu ausgebildet sein, einen Werkzeugantrieb zu schalten oder zu steuern.

Ein Führungssystem (11) weist bevorzugt eine Basisstation (20) für die Betriebsunterstützung eines Fahrzeugs (1) auf. Eine solche Basisstation (20) kann beispielsweise dazu ausgebildet sein, den Energiespeicher eines Fahrzeugs (1) aufzuladen. Bei einem Mähroboter kann eine Basisstation (20) beispielsweise dazu ausgebildet sein, einen am Fahrzeug (1) angeordneten Schnittgutspeicher zu leeren. Eine Basisstation (20) kann je nach Ausbildung des Fahrzeugs (1) eine Betriebsunterstützung auch in anderer Form gewährleisten, wie beispielsweise durch Werkzeugwechsel oder Bereitstellung von Betriebsmitteln wie Reinigungsmitteln etc.

Eine am Fahrzeug (1) angeordnete Auswerteeinrichtung (13) kann beliebig ausgebildet sein. Sie kann beispielsweise über einen Speicher, einen Prozessor und ein Eingabe- und Ausgabewerk verfügen. Die Auswerteeinrichtung (13) weist bevorzugt ein mit der Codeerkennungseinrichtung (10) verbundenes Auswertemodul (14) für die Auswertung des von der Codeerkennungseinrichtung (10) aufbereiteten codierten Signalinhalts auf. Eine solche Auswertung kann beispielsweise die Ermittlung der örtlichen Relativbeziehung eines Sensors (4) in Bezug auf einen Leiter (3) betreffen.

Die Auswerteeinrichtung (13) kann alternativ oder zusätzlich eine separate und mit der Empfangseinheit (12) verbundene Auswerteeinheit (17) aufweisen. Eine solche Auswerteeinheit (17) kann bevorzugt direkt das von der Empfangseinheit (12) ausgegebene Empfangssignal (23) auswerten. Beispielsweise kann eine solche separate Auswerteeinheit (17) in einem besonders schnellen Verfahren die Höhe einer induzierten Spannung ermitteln und daraus einen lateralen Abstand d des Sensors (4) von einem Leiter (3) berechnen. Auf diese Weise kann erreicht werden, dass über diese schnelle Auswertung eine besonders genaue und reaktionsschnelle Regelung zur Nachverfolgung eines Leiters ermöglicht wird.

Sind ein Auswertemodul (14) und eine Auswerteeinheit (17) vorhanden, können diese gegebenenfalls parallel auf das Empfangssignal (23) bzw. das aufbereitete codierte Signal zugreifen und diese parallel auswerten.

Eine Codiereinrichtung (7) zur Erzeugung eines Signalcodes (15) im Leiterstrom kann beliebig ausgebildet sein. Sie kann bevorzugt mit einer Stromeinspeisung (2) kombiniert sein. Alternativ kann eine Codiereinrichtung (7) separat vorliegen. Codiereinrichtung (7) und Stromeinspeisung (2) können mit einer Basisstation (20) zusammengefasst sein. Eine Codiereinrichtung (7) ist bevorzugt dazu ausgebildet, ein Sendesignal (21) als Stromsignal auf dem Leiter (3) auszugeben. Das Stromsignal ist dabei bevorzugt als vorgegebene Signalabfolge (18) von unterscheidbaren Signaleinheiten (L,L') entsprechend einem Signalcode (15) ausgebildet.

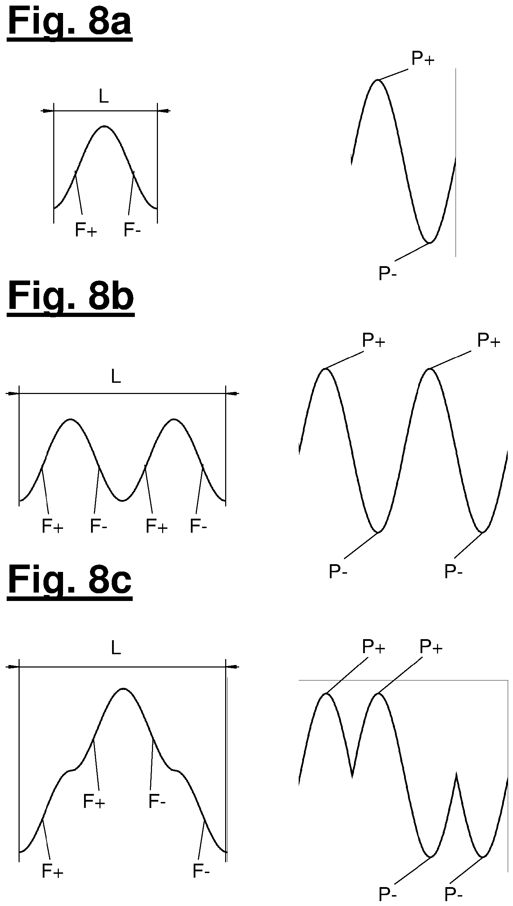

Die Signaleinheiten (L,L') können dabei beliebig ausgebildet sein. Eine Signaleinheit (L) ist bevorzugt als eine bekannte Folge von zwei oder mehreren ansteigenden oder abfallenden Flanken F+, F- im Stromverlauf ausgebildet. Die Flanken F+, F- sind dabei bevorzugt derart ausgebildet, dass das Stromsignal am Ende einer Signaleinheit (L) auf dasselbe Stromniveau zurückkehrt, wie es zu Beginn der Signaleinheit (L) vorlag. In den Figuren 8a bis 8c sind beispielhaft verschiedene Möglichkeiten zur Ausbildung einer Signaleinheit (L) aufgezeigt. Eine Signaleinheit (L') kann dabei jeweils das betragsmäßige Negat einer Signaleinheit (L) darstellen. In **Figur 8a** ist beispielsweise eine Signaleinheit L gemäß der folgenden, bereits oben genannten Beziehung ausgebildet:

$$I(L) = I_0 * (1 - \cos(\omega t))$$

Eine solche Signaleinheit (L) weist eine steigende Flanke (F+) und eine fallende Flanke (F-) im Stromverlauf auf. Rechts daneben ist ein entsprechend zu erwartender Verlauf einer induzierten Spannung dargestellt, der einen positiven Peak (P+) und einen negativen Peak (P-) aufweist. Die in **Figur 8b** dargestellte Signaleinheit (L) hat eine alternative Signalform und weist eine Folge von positiven und negativen Flanken (F+, F-, F+, F-) auf. Dementsprechend ist ein Verlauf der induzierten Spannung mit den Peaks (P+, P-, P+, P-) zu erwarten. Schließlich kann eine Signaleinheit (L,L') nicht nur aus einer Verdopplung der Flankenfolge (F+,F-), sondern aus einer beliebig häufigen Wiederholungszahl bestehen. Die Wiederholungszahl kann beispielsweise 2, 4, 8, 16, 32, 100, 1000 oder größer sein.

Eine weitere beispielhafte Alternative ist der Verlauf eines Signalstroms gemäß **Figur 8c,** bei der eine Signaleinheit (L) aus einer Folge von Flanken (F+, F+, F-, F-) zusammengesetzt ist, was entsprechend zu einem zu erwartenden Verlauf der induzierten Spannung mit einer Peakfolge (P+, P+, P-, P-) führt.

Es ist für den Fachmann bereits aus den genannten Beispielen erkennbar, dass als Signaleinheit (L) eine Vielzahl von Signalformen möglich ist. So kann eine Signaleinheit (L) beispielsweise eine Sägezahnform oder eine Trapezform oder eine beliebige andere Signalform haben. Der oben beschriebene Auswertealgorithmus über Bildung von geshifteten Skalarprodukten ($Z_i$) lässt sich auch auf eine Abfolge von Signaleinheiten (L,L') erfolgreich anwenden, bei denen die Signalformen von (L) und (L') als zufällig gewählte unterscheidbare Rauschsequenzen gebildet sind, was die Robustheit der möglichen Auswertung und die Bandbreite der nutzbaren Signalformen verdeutlicht.

Eine Signalabfolge (18) ist erfindungsgemäß als eine Kette von aneinander anschließenden Signaleinheiten (L,L') ausgebildet. Dabei wird bevorzugt für jeden Wert +1 im Signalcode eine Signaleinheit (L) erzeugt und für jeden Wert (-1) eine Signaleinheit L'. Ein Stromsignal auf dem Leiter (3) kann bevorzugt als Dauersignal durch ständige, aneinander anschließende Wiederholung einer so gebildeten Signalabfolge (18) aufgebracht sein. In diesem Fall kann ein Messwerttupel A zu einem beliebigen Zeitpunkt aus einem gemessenen Empfangssignal (23) gesampelt werden. Dementsprechend kann eine besonders reaktionsschnelle Auswertung des Empfangssignals (23) erfolgen, ohne dass auf einen besonderen Startimpuls oder ähnliches gewartet werden müsste. Alternativ kann ein Stromsignal (21) als Intervallsignal ausgebildet sein. Ein solches Intervallsignal kann beispielsweise eine endlich häufige, aneinander anschließende Wiederholung einer Signalabfolge (18) sein, die sich mit zwischenzeitlichen Ruhepausen oder einem anderen Intervallsignal abwechselt.

Bei Verwendung eines Intervallsignals kann es demnach möglich sein, nacheinander Intervallsignale mit unterschiedlichen vorbekannten Signalcodes (15) zu senden. Eine Auswerteeinrichtung (13) am Fahrzeug (1) kann über einen Satz von bekannten Signalcodes (15) verfügen und in Abhängigkeit eines erkannten Signalcodes (15) unterschiedliche Informationen bereitstellen.

Eine Steuereinrichtung (16) kann in Abhängigkeit von den von der Auswerteeinrichtung (13) ausgegebenen Informationen beispielsweise ein Bearbeitungswerkzeug (8,9) aktivieren oder deaktivieren oder zwischen unterschiedlichen Betriebszuständen umschalten. So kann beispielsweise ein bestimmter Signalcode (15) dazu verwendet werden, einem Fahrzeug (1) die Anweisung zu geben, zur Basisstation zurückzukehren. Das Fahrzeug kann dabei beispielsweise einem Leiter (3) in Richtung zur Basisstation (20) nachfahren und so auf einem schnellen und direkten Weg zur Basisstation (20) zurückgeführt werden. Ein längeres Suchen der Basisstation (20) durch das Fahrzeug (1) kann somit vermieden werden, wodurch die Ausnutzung des Energiespeichers optimiert wird.

Durch die Signalcode-basierte Übermittlung von Nachrichten von einer Basisstation (20) oder Stromeinspeisung (2) an ein Fahrzeug (1) kann somit ein Fahrzeug (1) aus der Ferne automatisch gesteuert werden.

Die Erfindung ist nicht auf die vorbeschriebenen Ausführungsbeispiele beschränkt. Die Merkmale der aufgezeigten Ausführungsbeispiele können beliebig kombiniert, weggelassen, ergänzt oder gegeneinander ausgetauscht werden. Ein Fahrzeug (1) kann insbesondere auch als Vertikutierroboter ausgebildet sein und ein Bodenbearbeitungswerkzeug in Form eines Vertikutierwerkzeugs aufweisen. Anstelle von Lenk- und Antriebsrädern kann ein Fahrzeug (1) auch über eine andere Antriebsform, wie beispielsweise einen Kettenantrieb oder einen Luftkissenantrieb verfügen. Die Systematik zur Erkennung eines lateralen Abstands d von einem Leiter kann bei entsprechender Richtungsumkehr auch genutzt werden, um eine vertikale Höhe über einen Leiter oder ähnliches zu bestimmen. Ein Fahrzeug (1) kann auch als Transport- oder Förderfahrzeug ausgebildet sein.

Die folgenden Merkmale sind für sich allein oder in Kombination für die Erfindung bedeutsam, wobei sie separat oder in beliebiger Kombination mit einem Führungssystem oder einem Verfahren zum Führen eines Fahrzeugs nutzbar sind.

Erfindungsgemäß ist eine Signaleinheit (L,L') als eine bekannte Folge von zwei oder mehreren ansteigenden oder abfallenden Flanken (F+,F-) im Stromverlauf ausgebildet. Weiterhin ist es von Bedeutung, ein Stromsignal als Dauersignal durch ständige, aneinander anschließende Wiederholung einer Signalabfolge (18) auszubilden.

Alternativ oder zusätzlich kann ein Stromsignal als Intervallsignal ausgebildet sein. Bei einem Wechsel zwischen zwei im Leiterstrom zu erzeugenden Signalcodes kann eine kurze Sendepause vorgenommen werden. Alternativ kann eine ununterbrochene Versendung erfolgen. Alternativ kann ein vorbestimmter Signalcode versendet werden, der das Nachfolgen von einem oder mehreren Informationsträger-Signalcodes ankündigt.

Es ist ferner von Bedeutung, dass eine Steuereinrichtung (16) eine Lenkeinrichtung aufweisen kann. Alternativ oder zusätzlich kann eine Steuereinrichtung (16) eine Steuerung für ein Bearbeitungswerkzeug (8) aufweisen. Eine Steuerung des Bearbeitungswerkzeugs kann unabhängig von der Übermittlung von Signalcodes erfolgen. Alternativ kann eine Steuerung eines Bearbeitungswerkzeugs in Abhängigkeit von bestimmten Signalcodes ausgeführt werden.

Es ist bedeutsam, ein Fahrzeug (1) derart auszuführen, dass es einen Antrieb (19) in Form eines schaltbaren oder steuerbaren Fahrantriebs aufweist. Alternativ oder zusätzlich kann ein Fahrzeug (1) einen schaltbaren oder steuerbaren Werkzeugantrieb aufweisen.

Es ist von Bedeutung, ein Fahrzeug (1) derart auszubilden, dass es einen Energiespeicher für einen oder mehrere Antriebe aufweist. Alternativ oder zusätzlich kann ein Energiespeicher für eine Steuereinrichtung (16) vorgesehen sein.

Es ist von besonderem Vorteil, eine Basisstation im Leiterbereich anzuordnen. Eine solche Basisstation kann eine Betriebsunterstützung für ein Fahrzeug oder mehrere Fahrzeuge gewährleisten. Alternativ oder zusätzlich können Basisstationen oder Betriebsunterstützungsstationen außerhalb des Leiterbereichs und insbesondere innerhalb eines durch einen Leiter begrenzten Flächenbereichs vorgesehen sein.

Es ist von Bedeutung, eine Codeerkennungseinrichtung (10) derart auszubilden, dass sie aus einer Abfolge von erkannten Signaleinheiten (L,L') einen Signalcode (15) in Form eines Empfangstupels (A) bildet und mit einem vorbekannten Signalcode (15) in Form eines Vergleichstupels (C) vergleicht. Alternativ oder zusätzlich kann eine Codeerkennungseinrichtung (10) dazu ausgebildet sein, aus einem Empfangstupel ($A_0$) ein geshiftetes Tupel ($A_i$) zu erstellen, wobei die Elemente eines geshifteten Tupels ($A_i$) um eine Shiftweite (i) zu dem Empfangstupel ($A_0$) rotiert werden. Ferner alternativ oder zusätzlich kann eine Codeerkennungseinrichtung dazu ausgebildet sein, aus einem geshifteten Tupel ($A_i$) und einem Vergleichstupel (C) ein Skalarprodukt ($Z_i$) zu erstellen, wobei ein Skalarprodukt ($Z_i$) als die Summe der elementweise gebildeten Produkte von geshiftetem Tupel ($A_i$) und Vergleichstupel (C) gebildet ist. Die oben beschriebenen Schritte zur Führung eines Fahrzeugs (1) in einem Führungssystem können von beliebigen technischen Komponenten ausgeführt werden. Insbesondere kann die Erzeugung eines Signalcodes im Leiterstrom in beliebiger Weise erfolgen. Ebenso kann die Erkennung eines Signalcodes beliebig ausgeführt sein. Die entsprechenden Verfahrensschritte können einzeln oder gemeinsam von einer oder mehreren technischen Komponenten ausgeführt werden. Sie können in der oben beschriebenen Reihenfolge oder in beliebiger anderer Abfolge ausgeführt sein.

BEZUGSZEICHENLISTE

| | |
|---|---|
| 1 | Fahrzeug / Rasenmäher |
| 2 | Stromeinspeisung |
| 3 | elektrischer Leiter |
| 4 | Sensor |
| 5 | Magnetfeld |
| 6 | Feldlinie |
| 7 | Codiereinrichtung |
| 8 | Bearbeitungswerkzeug |
| 9 | Bodenbearbeitungswerkzeug |
| 10 | Codeerkennungseinrichtung |
| 11 | Führungssystem |
| 12 | Empfangseinheit |
| 13 | Auswerteeinrichtung |
| 14 | Auswertemodul |
| 15 | Signalcode |
| 16 | Steuereinrichtung |
| 17 | Auswerteeinheit |
| 18 | Signalabfolge |
| 19 | Antrieb / Fahrantrieb |
| 20 | Basisstation |
| 21 | Sendesignal / Signalstrom |
| 22 | erwartetes Empfangssignal |
| 23 | gemessenes Empfangssignal / induzierte Spannung |

| | |
|---|---|
| $\alpha$ | Winkel |
| $\varphi$ | Phasenverschiebung |

| | |
|---|---|
| A, $A_0$ | Messwerttupel / Empfangstupel |
| $A_i$ | um i geshiftetes Messwerttupel / geshiftetes Tupel |
| $A_i[j]$ | Einzelwert an Stelle j im um i geshifteten Messwerttupel |
| B | magnetische Flussdichte |
| B(h,d) | Flussdichte an einer Position mit Höhe z=h und Abstand x=d vom Leiter |
| $B_z(h,d)$ | Vertikalkomponente der Flussdichte an einer Position mit Höhe z=h und Abstand x=d vom Leiter |

| | |
|---|---|
| C | Vergleichstupel / erwartetes Messwerttupel |
| C[j] | Einzelwert an der Stelle j im Vergleichstupel |
| D | Horizontaler Abstand vom Leiter |
| F+ | Steigende Flanke der Signalgröße |
| F- | Fallende Flanke der Signalgröße |
| h | Höhe über Leiter |
| i | Laufindex zur Angabe der Shiftweite |
| $I_{sig}$ | Signalstrom |
| j | Laufindex zur Angabe des Tupelglieds |
| L, L' | Signaleinheit |
| n | Anzahl der Elemente eines Tupels / Signalcodes |
| P+ | Positiver Peak in der Messwertgröße |
| P- | Negativer Peak in der Messwertgröße |
| r | Radius |
| S | Signalwerttupel |
| $U_{exp}$ | Erwarteter Spannungsverlauf / erwartetes Signal |
| $U_m$ | Gemessener Spannungsverlauf / empfangenes Signal |
| $Z_i$ | Skalarprodukt bei Shiftweite i |

**Patentansprüche**

1.  Führungssystem für steuerbare Fahrzeuge (1), wobei das Führungssystem (11) einen außerhalb des Fahrzeugs (1) angeordneten elektrischen Leiter (3), insbesondere ein Bodenkabel, und eine Stromeinspeisung (2) für den Leiter (3) aufweist, wobei am Fahrzeug (1) eine Empfangseinheit (12) für das elektromagnetische Feld (5,6) des Leiterstroms angeordnet ist, wobei das Führungssystem (11) eine Codiereinrichtung (7) zur Erzeugung eines Signalcodes (15) im Leiterstrom aufweist und am Fahrzeug (1) eine mit der Empfangseinheit (12) verbundene Codeerkennungseinrichtung (10) für den Signalcode (15) angeordnet ist,
    **dadurch gekennzeichnet, dass** die Codiereinrichtung (7) dazu ausgebildet ist, ein Stromsignal als vorgegebene Signalabfolge (18) von unterscheidbaren Signaleinheiten (L,L') entsprechend einem Signalcode (15) zu bilden und die Signalabfolge (18) als eine Kette von aneinander anschließenden Signaleinheiten (L,L') ausgebildet ist, wobei eine Signaleinheit (L,L') als eine bekannte Folge von zwei oder mehreren ansteigenden oder abfallenden Flanken (F+,F-) im Stromverlauf ausgebildet ist.

2.  Führungssystem nach Anspruch 1, **dadurch gekennzeichnet, dass** das Fahrzeug (1) automatisch steuerbar ist.

3.  Führungssystem nach einem der Ansprüche 1 oder 2,
    **dadurch gekennzeichnet, dass** am Fahrzeug (1) eine Auswerteeinrichtung (13) mit mindestens einem Sensor (4) angeordnet ist, die aus vom Leiter (3) empfangenen Strom- und/oder Spannungsverläufen eine örtliche Relativbeziehung des Sensors (4) gegenüber dem Leiter (3) ermittelt.

4.  Führungssystem nach Anspruch 3, **dadurch gekennzeichnet, dass** am Fahrzeug (1) eine mit der Auswerteeinrichtung (13) verbundene Steuereinrichtung (16) angeordnet ist, die das Fahrzeug (1) anhand der übermittelten Informationen der Auswerteeinrichtung (13) steuert.

5.  Führungssystem nach Anspruch 3 oder 4, **dadurch gekennzeichnet, dass** die Auswerteeinrichtung (13) ein mit der Codeerkennungseinrichtung (10) verbundenes Auswertemodul (14) für die Auswertung des von der Codeerkennungseinrichtung (10) aufbereiteten codierten Signalinhalts aufweist.

6.  Führungssystem nach Anspruch 3, 4 oder 5, **dadurch gekennzeichnet, dass** die Auswerteeinrichtung (13) eine separate und mit der Empfangseinheit (12) verbundene Auswerteeinheit (17) aufweist.

7.  Führungssystem nach einem der vorhergehenden Ansprüche, **dadurch gekennzeichnet, dass** ein Fahrzeug (1) ein Bearbeitungswerkzeug (8), insbesondere ein Bodenbearbeitungswerkzeug (9), insbesondere ein Mähwerkzeug, ein Vertikutierwerkzeug oder ein Reinigungswerkzeug trägt.

8.  Führungssystem nach einem der vorhergehenden Ansprüche, **dadurch gekennzeichnet, dass** das Fahrzeug (1) Antriebs- und Lenkräder hat.

9. Führungssystem nach einem der vorhergehenden Ansprüche, **dadurch gekennzeichnet, dass** das Führungssystem eine Basisstation (20) für die Betriebsunterstützung eines Fahrzeugs (1) aufweist.

10. Führungssystem nach einem der vorhergehenden Ansprüche, **dadurch gekennzeichnet, dass** eine Codeerkennungseinrichtung (10) in einem empfangenen Signal (U m) Signaleinheiten (L,L') separiert und ihre Abfolge erkennt.

11. Führungssystem nach einem der vorhergehenden Ansprüche, **dadurch gekennzeichnet, dass** eine Codeerkennungsrichtung (10) aus einer Abfolge von erkannten Signaleinheiten (L,L') einen Signalcode (15) in Form eines Empfangstupels (A) bildet und mit einem vorbekannten Signalcode (15) in Form eines Vergleichstupels (C) vergleicht, wobei eine Codeerkennungseinrichtung (10) dazu ausgebildet ist, aus einem Empfangstupel ($A_0$) ein geshiftetes Tupel ($A_i$) zu erstellen, wobei die Elemente eines geshifteten Tupels ($A_i$) um eine Shiftweite (i) zu dem Empfangstupel ($A_0$) rotiert werden, und wobei eine Codeerkennungseinrichtung (10) dazu ausgebildet ist, aus einem geshifteten Tupel ($A_i$) und einem Vergleichstupel (C) ein Skalarprodukt ($Z_i$) zu erstellen, wobei ein Skalarprodukt ($Z_i$) als die Summe der elementweise gebildeten Produkte von geshiftetem Tupel ($A_i$) und Vergleichstupel (C) gebildet ist.

12. Verfahren zur Führung eines Fahrzeugs (1) mit einem elektrischen Leiter (3), insbesondere einem Bodenleiter, wobei das Fahrzeug (1) über eine Empfangseinheit (12) ein Feld (5) erfasst, das durch ein Stromsignal (21) in dem elektrischen Leiter (3) erzeugt wird, wobei das Fahrzeug (1) mittels einer Codeerkennungseinrichtung (10) einen Signalcode (15) in dem Empfangssignal (22) erkennt und auswertet,
**dadurch gekennzeichnet, dass** die Codiereinrichtung (7) ein Stromsignal als vorgegebene Signalabfolge (18) von unterscheidbaren Signaleinheiten (L,L') entsprechend einem Signalcode (15) bildet und
die Signalabfolge (18) als eine Kette von aneinander anschließenden Signaleinheiten (L,L') bildet, wobei eine Signaleinheit (L,L') als eine bekannte Folge von zwei oder mehreren ansteigenden oder abfallenden Flanken (F+,F-) im Stromverlauf gebildet wird.

13. Verfahren nach Anspruch 12, **dadurch gekennzeichnet, dass** eine am Fahrzeug (1) angeordnete Steuereinrichtung (16) das Fahrzeug (1) in Abhängigkeit von Informationen steuert, die aus dem erkannten Signalcode (15) hervorgehen.

**Claims**

1. Guide system for controllable vehicles (1),
wherein the guide system (11) has an electrical conductor (3) which is arranged outside the vehicle (1), in particular an underfloor cable and a power feed (2) for the conductor (3), wherein a receiver unit (12) for the electromagnetic field (5, 6) of the conductor current is arranged on the vehicle (1), wherein the guide system (11) has a coding device (7) for generating a signal code (15) in the conductor current, and a code-detection device (10), connected to the receiver unit (12), for the signal code (15) is arranged on the vehicle (1),
**characterized in that**
the coding device (7) is designed to form a power signal as a specified signal sequence (18) of differentiable signal units (L, L') in accordance with a signal code (15), and the signal sequence (18) is embodied as a chain of adjoining signal units (L, L'), wherein a signal unit (L, L') is embodied as a known sequence of two or more rising or falling edges (F+, F-) in the power profile.

2. Guide system according to Claim 1, **characterized in that** the vehicle (1) can be controlled automatically.

3. Guide system according to either of Claims 1 and 2,
**characterized in that** an evaluation unit (13) with at least one sensor (4) is arranged on the vehicle (1), which determines a local relative relationship of the sensor (4) to the conductor (3) from power and/or voltage profiles which are received by the conductor (3).

4. Guide system according to Claim 3, **characterized in that** a control device (16) which is connected to the evaluation device (13) and which controls the vehicle (1) on the basis of transferred information on the evaluation device (13) is arranged on the vehicle (1).

5. Guide system according to Claim 3 or 4, **characterized in that** the evaluation device (13) has an evaluation module (14), connected to the code-detection device (10), for evaluation of the coded signal content prepared by the code-detection device (10).

6. Guide system according to Claim 3, 4 or 5, **characterized in that** the evaluation device (13) has a separate evaluation unit (17) which is connected to the receiver unit (12).

7. Guide system according to one of the preceding claims, **characterized in that** a vehicle (1) bears a cultivating tool (8), in particular a soil cultivating tool (9), in particular a mowing tool, a scarifying tool or a cleaning tool.

8. Guide system according to one of the preceding claims, **characterized in that** the vehicle (1) has drive wheels and steered wheels.

9. Guide system according to one of the preceding claims, **characterized in that** the guide system has a base station (20) for assisting the operation of a vehicle (1).

10. Guide system according to one of the preceding claims, **characterized in that** a code-detection device (10) separates signal units (L, L') in a received signal (U_m), and detects the sequence of said signal units (L, L').

11. Guide system according to one of the preceding claims, **characterized in that** a code-detection device (10) forms a signal code (15) in the form of a reception tuple (A) from a sequence of detected signal units (L, L') and compares it with a previously known signal code (15) in the form of a comparison tuple (C), wherein a code-detection device (10) is designed to produce a shifted tuple $(A_i)$ from a reception tuple $(A_0)$ , wherein the elements of a shifted tuple $(A_i)$ are rotated by one shift width (i) with respect to the reception tuple $(A_0)$, and wherein a code-detection device (10) is designed to produce a scalar product $(Z_i)$ from a shifted tuple $(A_i)$ and a comparison tuple (C), wherein a scalar product $(Z_i)$ is formed as the sum of the products which are formed on an element basis from a shifted tuple $(A_i)$ and the comparison tuple (C).

12. Method for guiding a vehicle (1) with an electrical conductor (3), in particular an underfloor conductor, wherein the vehicle (1) senses, via a receiver unit (12), a field (5) which is generated by a power signal (21) in the electrical conductor (3), wherein the vehicle (1) detects and evaluates a signal code (15) in the reception signal (22) by means of a code-detection device (10), **characterized in that** a coding device (7) forms a power signal as a specified signal sequence (18) of differentiable signal units (L, L') in accordance with a signal code (15), and the signal sequence (18) forms as a chain of adjoining signal units (L, L'), wherein a signal unit (L, L') is formed as a known sequence of two or more rising or falling edges (F+, F-) in the power profile.

13. Method according to Claim 12, **characterized in that** a control device (16) which is arranged on the vehicle (1) controls the vehicle (1) in accordance with information which is obtained from the detected signal code (15).

## Revendications

1. Système de guidage pour véhicules (1) pouvant être commandés, le système de guidage (11) présentant un conducteur électrique (3) disposé à l'extérieur du véhicule (1), en particulier un câble au sol, et une alimentation en courant (2) pour le conducteur (3), une unité de réception (12) pour le champ électromagnétique (5, 6) du courant de conducteur étant disposée sur le véhicule (1), le système de guidage (11) présentant un dispositif de codage (7) pour produire un code de signal (12) dans le courant de conducteur, et un dispositif de reconnaissance de code (10) pour le code de signal (15) relié à l'unité de réception étant disposé sur le véhicule,
   **caractérisé en ce que** le dispositif de codage (7) est réalisé pour former selon un code de signal (15) un signal de courant sous la forme d'une séquence de signaux (18) prédéfinie d'unités de signal (L, L') distinctes, et
   la séquence de signaux (18) est réalisée sous la forme d'une chaîne d'unités de signal (L, L') consécutives, une unité de signal (L, L') étant réalisée sous la forme d'une série connue de deux ou plusieurs flancs montants ou descendants (F+, F-) dans la courbe de courant.

2. Système de guidage selon la revendication 1, **caractérisé en ce que** le véhicule (1) peut être commandé automatiquement.

3. Système de guidage selon l'une quelconque des revendications 1 et 2, **caractérisé en ce qu'**une unité d'évaluation (13) dotée d'au moins un capteur (4) est disposée sur le véhicule (1) et détermine à partir des courbes de courant et/ou de tension reçus du conducteur (3) un rapport local relatif entre le capteur (4) et le conducteur (3).

4. Système de guidage selon la revendication 3, **caractérisé en ce qu'**un dispositif de commande (16) relié au dispositif d'évaluation (13) est disposé sur le véhicule (1) et commande le véhicule (1) à l'aide des informations transmises du dispositif d'évaluation (13).

5. Système de guidage selon la revendication 3 ou 4, **caractérisé en ce que** le dispositif d'évaluation (13) présente un module d'évaluation (14) relié au dispositif de reconnaissance de code (10) pour l'évaluation du contenu de signal codé mis en forme par le dispositif de reconnaissance de code (10) .

6. Système de guidage selon la revendication 3, 4 ou 5, **caractérisé en ce que** le dispositif d'évaluation (13) présente une unité d'évaluation (17) séparée et reliée à l'unité de réception (12) .

7. Système de guidage selon l'une quelconque des revendications précédentes, **caractérisé en ce qu'**un véhicule (1) porte un outil de traitement (8), en particulier un outil de traitement du sol (9), en particulier un outil de tonte, un outil de scarification ou un outil de nettoyage.

8. Système de guidage selon l'une quelconque des revendications précédentes, **caractérisé en ce que** le véhicule (1) dispose de roues motrices et directrices.

9. Système de guidage selon l'une quelconque des revendications précédentes, **caractérisé en ce que** le système de guidage présente une station de base (20) pour l'assistance au fonctionnement d'un véhicule (1).

10. Système de guidage selon l'une quelconque des revendications précédentes, **caractérisé en ce qu'**un dispositif de reconnaissance de code (10) sépare dans un signal reçu ($U\_m$) des unités de signal (L, L') et reconnaît leur séquence.

11. Système de guidage selon l'une quelconque des revendications précédentes, **caractérisé en ce qu'**un dispositif de reconnaissance de code (10) forme à partir d'une séquence d'unités de signal (L, L') reconnues un code de signal (15) sous la forme d'un tuple de réception (A) et le compare avec un code de signal (15) déjà connu sous la forme d'un tuple de comparaison (C), un dispositif de reconnaissance de code (10) étant réalisé pour créer un tuple décalé ($A_1$) à partir d'un tuple de réception ($A_0$), les éléments d'un tuple décalé ($A_1$) étant amenés à pivoter d'une largeur de décalage (i) par rapport au tuple de réception ($A_0$), et un dispositif de reconnaissance de code (10) étant réalisé pour créer un produit scalaire ($Z_i$) à partir d'un tuple décalé ($A_1$) et d'un tuple de comparaison (C), un produit scalaire ($Z_i$) étant formé sous la forme de la somme des produits formés élément par élément du tuple décalé ($A_1$) et du tuple de comparaison (C).

12. Procédé permettant de guider un véhicule (1) doté d'un conducteur électrique (3), en particulier d'un conducteur au sol, le véhicule (1) détectant par une unité de réception (12) un champ (5) qui est produit par un signal de courant (21) dans le conducteur électrique (3), dans lequel le véhicule (1) reconnaît au moyen d'un dispositif de reconnaissance de code (10) un code de signal (15) dans le signal de réception (22) et l'évalue, **caractérisé en ce que** le dispositif de codage (7) forme selon un code de signal (15) un signal de courant sous la forme d'une séquence de signaux (18) prédéfinie d'unités de signal (L, L') distinctes, et
la séquence de signaux (18) forme sous la forme d'une chaîne d'unités de signal (L, L') consécutives, une unité de signal (L, L') étant formée sous la forme d'une série connue de deux ou plusieurs flancs montants ou descendants (F+, F-) dans la courbe de courant.

13. Procédé selon la revendication 12, **caractérisé en ce qu'**un dispositif de commande (16) disposé sur le véhicule (1) commande le véhicule (1) en fonction d'informations qui ressortent du code de signal (15) reconnu.

# Fig. 1

4,12

13

8,9

10

16

19

1

5

6

20

7

2

3

11

# Fig. 2

z

$\underline{B(h,d)}$

B_z(h,d)

$\alpha$

4

d'

d

4

h

$\alpha$

r

x

$\underline{B(h,d')}$

B_z(h,d')

3

6

# Fig. 3

B_z(1,x)

B_z

x in [1/h]

-4  -3  -2  -1  0  1  2  3  4

# Fig. 4

15

| -1 | -1 | -1 | +1 | +1 | +1 | +1 | -1 | +1 | -1 | +1 | +1 | -1 | -1 | +1 |

L

21

18

L'

φ

22

23

# Fig. 5

# Fig. 6

# Fig. 7

| C | | A0 | | A1 | | A2 | ... | | A8 | ... |
|---|---|----|---|----|---|----|-----|---|----|-----|
| -1 | x | **-1** | x | +1 | x | +1 | | x | -1 | |
| -1 | x | +1 | x | **-1** | x | +1 | | x | -1 | |
| -1 | x | -1 | x | +1 | x | **-1** | | x | -1 | |
| +1 | x | +1 | x | -1 | x | +1 | | x | +1 | |
| +1 | x | +1 | | +1 | | -1 | | | +1 | |
| +1 | x | -1 | | +1 | | +1 | | | +1 | |
| +1 | x | -1 | | -1 | | +1 | | | +1 | |
| -1 | x | +1 | | -1 | | -1 | | | **-1** | |
| +1 | x | -1 | | +1 | | -1 | | | +1 | |
| -1 | x | -1 | | -1 | | +1 | | | -1 | |
| +1 | x | -1 | | -1 | | -1 | | | +1 | |
| +1 | x | +1 | | -1 | | -1 | | | +1 | |
| -1 | x | +1 | | +1 | | -1 | | | -1 | |
| -1 | x | +1 | | +1 | | +1 | | | -1 | |
| +1 | x | +1 | | +1 | | +1 | | | +1 | |

| Z0 | Z1 | Z2 | ... | | | | Z8 | ... | | | | |
|----|----|----|-----|---|---|---|----|-----|---|---|---|---|
| -1 | -1 | -1 | -1 | -1 | -1 | -1 | -1 | 15 | -1 | -1 | -1 | -1 | -1 |

## Fig. 8a

## Fig. 8b

## Fig. 8c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2257081 A1
- DE 102009005119 A1